(19) Europäisches Patentamt
European Patent Office
Office européen des brevets

(11) **EP 2 624 235 A2**

(12) **EUROPEAN PATENT APPLICATION**

(43) Date of publication:
**07.08.2013 Bulletin 2013/32**

(51) Int Cl.:
***G08G 1/0968*** (2006.01)   ***G01C 21/34*** (2006.01)

(21) Application number: **13153585.8**

(22) Date of filing: **01.02.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.02.2012 JP 2012021743**

(71) Applicant: **Clarion Co., Ltd.**
**Saitama 330-0081 (JP)**

(72) Inventors:
• **OKUDE, Mariko**
  **Tokyo, 100-8220 (JP)**
• **KUMAGAI, Masatoshi**
  **Tokyo, 100-8220 (JP)**

• **HIRUTA, Tomoaki**
  **Tokyo, 100-8220 (JP)**
• **KAMIWAKI, Tadashi**
  **Tokyo, 100-8220 (JP)**
• **AMAYA, Shinichi**
  **Saitama, 330-0081 (JP)**

(74) Representative: **MERH-IP**
**Matias Erny Reichl Hoffmann**
**Paul-Heyse-Strasse 29**
**80336 München (DE)**

Remarks:
A request for correction of the description has been filed pursuant to Rule 139 EPC. A decision on the request will be taken during the proceedings before the Examining Division (Guidelines for Examination in the EPO, A-V, 3.).

(54)   **Route guidance system, route guidance server apparatus and navigation terminal apparatus**

(57)   A navigation terminal apparatus (5) includes: terminal map data (515); a route search means for searching for a traveling route, through which a mobile object (4) is to travel, based upon a specific search condition pertaining to a travel cost; and an updating means for updating route data expressing the traveling route by replacing a first road link group making up a route segment accounting for at least part of the traveling route with a second road link group making up another route segment, with a start point and an end point thereof matching the start point and the end point of the route segment accounting for at least part of the traveling route. The another route segment is included in route information obtained from the external apparatus (6); and the route data include position reference data pertaining to positions of all road links constituting the traveling route and cost data pertaining to travel costs of all the road links.

FIG. 1

**Description**

The disclosure of the following priority application is herein incorporated by reference: Japanese Patent Application No. 2012-021743 filed February 3, 2012

The present invention relates to a route guidance system that will be preferred for route guidance applications.

The use of navigation apparatuses, typically capable of receiving, via broadcast or communication, the latest information transmitted from various information centers, which indicates relevant conditions such as traffic congestion conditions, and providing the driver with information indicating an optimal route to the destination determined by taking into consideration the latest information having been received, has become established in recent years as an accepted standard.

The basic functions of such a navigation apparatus include, for instance, a function that allows the navigation apparatus to receive the latest traffic information indicating traffic congestion and an expected traveling time, provided from a traffic information center through FM multiplex broadcast or the like and to display a route to the destination, via which the vehicle is expected to reach the destination with a minimum traveling time, determined by taking into consideration the traffic information, at a display device. Some navigation apparatuses also utilize traffic forecast information for a location that the subject vehicle is expected to pass through at a predicted time point, obtained from an information center, for purposes of route calculation executed to determine the optimal route to the destination, so as to ensure that the subject vehicle takes the fastest route to the destination and to estimate the arrival time with maximum accuracy. Navigation apparatuses, which obtain the optimal route calculated at an information center by factoring in the latest traffic information, and provide guidance to the destination through the route, have also become available on the market.

In addition, there are services that enhance navigation functions by allowing huge volumes of current information, including traffic information, available at various external sites (information centers) to be taken into a terminal. For instance, a portal site that supports users making travel plans at home may provide information indicating the optimal route to the destination, the optimal departure time, rest spots and the like, determined by factoring in the most recent updates on "dynamic" information indicating conditions that are fluctuating, e.g., facility admission fees, tolls, facility availability and event schedules. In addition, services offered in conjunction with recommended travel information providing the travel plan compiled at such a portal site through which the travel information is transferred to the navigation apparatus through communication or a portable storage medium so as to allow the information to be utilized by the navigation apparatus for purposes of route guidance to the destination, have also been gaining popularity.

The technologies that may be adopted in conjunction with such services to provide a terminal apparatus having navigation functions with information indicating a target road range and events/conditions originating from an information center, include, for instance, that disclosed in Japanese Laid Open Patent Publication No. 2002-228468. The transmission side selects nodes included in the target road range and transmits coordinate data indicating the coordinates of the selected nodes. The reception side, in turn, matches the node coordinates indicated in the coordinate data transmitted thereto with points on a map and executes a route search to determine a route that passes through the matched points so as to identify the target road range. An object of the art disclosed in this publication, in which nodes included in the target road range are selected on the transmission side, is to reduce the communication cost to be incurred when transmitting information indicating the target road range from the transmission side (information center) to the reception side (terminal apparatus).

Japanese Laid Open Patent Publication No. 2004-77254 asserts that it is desirable for a terminal apparatus to hold data reflecting information having become available most recently so as to allow the terminal apparatus to provide most reliable guidance by using the latest information available at the center. Accordingly, the publication discloses a terminal map update method whereby a route calculated on a terminal map is compared with a route calculated on a center map and upon detecting a difference between the two routes, center map data corresponding to an area where the difference manifests are transmitted to the terminal apparatus where they are used to update the terminal map. Through this method, the map at the terminal apparatus is updated so as to reflect the latest map, and as a result, a route can be determined through a route calculation executed at the terminal apparatus by factoring in the same latest information as that available at the information center.

In order for a terminal apparatus to be able to guide the vehicle through a recommended route calculated at a route guidance server in the related art, node coordinate string data indicating the coordinates of the nodes present along the recommended route or difference map data that can be used to calculate the recommended route must be transmitted from the route guidance server to the terminal apparatus. This gives rise to an issue in that the volume of data to be transmitted is bound to be very large. In addition, the terminal apparatus reconstructing a route based upon the recommended route node coordinate strings transmitted from the route guidance server must execute matching processing to match the nodes with points on the terminal map and route search processing to determine a route passing through the matched nodes. This means that if a large number of nodes is selected in order to reconstruct the route with accuracy, the terminal processing load executed for purposes of route reconstruction is bound to increase, which, in turn, will lead to a lengthy wait time to elapse after a route request issued by the user, before the route becomes available.

Even when only the difference map data are transmitted, the route calculation must be preceded by map update processing executed by using the difference map data and thus, a time lag is bound to occur before the route can be indicated.

According to the first aspect of the present invention, a navigation terminal apparatus that engages in information exchange with an external apparatus comprises: terminal map data that include road link data; a route search means for searching for a traveling route, through which a mobile object is to travel from an origin to a destination, by using the terminal map data based upon a specific search condition pertaining to a travel cost to be incurred as the mobile object travels through the traveling route; and/or an updating means for updating route data expressing the traveling route by replacing a first road link group making up a route segment accounting for at least part of the traveling route with a second road link group making up another route segment, with a start point and an end point thereof matching the start point and the end point of the route segment accounting for at least part of the traveling route. The another route segment is included in route information obtained from the external apparatus through the information exchange; and the route data include position reference data pertaining to positions of all road links constituting the traveling route and cost data pertaining to travel costs of all the road links.

According to the second aspect of the present invention, a route guidance system comprises: a route guidance server apparatus; and a navigation terminal apparatus according to the first aspect: the external apparatus is the route guidance server apparatus. The route guidance server apparatus includes: first server map data; a request accepting means for accepting the route fragment request, which include information indicating the origin, the destination and the specific search condition, transmitted by a transmission means of the navigation terminal apparatus; a server route search means for searching for a first traveling route for the mobile object, which extends from the origin to the destination, by using the first server map data based upon the specific search condition and traffic information; a road information acquisition means for obtaining, in response to the route fragment request having been accepted by the request accepting means, road information to be used in a route search for the first traveling route to be searched by the server route search means; a route fragment generation means for generating a route fragment made up with a single road link or a plurality of road links in response to the route fragment request, having been accepted by the request accepting means, by splitting the route determined through the route search executed based upon the specific route search condition so as to satisfy a predetermined criterion based upon the road information obtained by the road information acquisition means; and/or a distribution means for transmitting the route fragment having been generated by the route fragment generation means to a reception means of the navigation terminal apparatus.

According to the third aspect of the present invention, it is preferred that the route guidance server apparatus included in a route guidance system according to the second aspect.

BRIEF DESCRIPTION OF THE DRAWINGS

FIG. 1 is a functional block diagram pertaining to functions of a route guidance server and a navigation apparatus.
FIGS. 2A and 2B present flowcharts in reference to which the processing executed in the server apparatus 1 in order to generate route fragments is described.
FIG. 3 provides a supplementary diagram to be used in conjunction with FIG. 2.
FIG. 4 presents a flowchart in reference to which another method that may be adopted in the server apparatus 1 in order to generate route fragments is described.
FIG. 5 provides a supplementary diagram to be used in conjunction with FIG. 4.
FIG. 6 presents a flowchart of the processing executed in the navigation terminal 5 in order to reconstruct a route by using route fragments.
FIG. 7 provides a supplementary diagram to be used in conjunction with FIG. 6.
FIGS. 8A and 8B present examples of route fragment data that may be generated in the route fragment generation unit 18 of the server apparatus 1.
FIG. 9 presents a flowchart of an example of processing that may be executed in the navigation terminal 5 in order to generate route data by using route fragments.
FIG. 10 provides a supplementary diagram to be used in conjunction with FIG. 9.
FIG. 11 presents a flowchart of another example of processing that may be executed in the navigation terminal 5 in order to generate route data by using route fragments.
FIG. 12 illustrates how a route display may be provided at the navigation terminal 5.

DESCRIPTION OF PREFERRED EMBODIMENTS

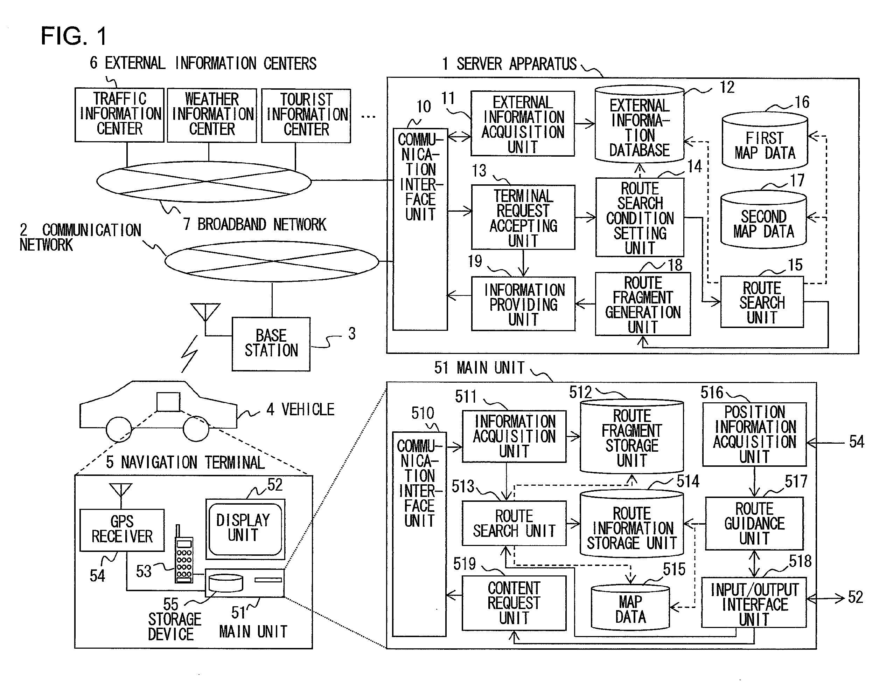

The following is a detailed description of an embodiment of the present invention, given in reference to drawings.
(Overall configuration of route guidance system including a server apparatus 1 and a navigation terminal 5) FIG. 1 shows the overall configuration of the route guidance system achieved in the embodiment of the present invention. The following description is given by assuming that the route guidance system in the embodiment is configured with a server apparatus 1 and a navigation terminal 5 engaged in communication with each other. As shown in FIG. 1, the server apparatus 1 achieved in the embodiment, which is connected to a communication network 2, is further connected with the navigation terminal 5 installed in a vehicle 4 through wireless communication carried out via, for instance, a mobile telephone and a base station 3. In addition, the server apparatus 1 is also connected to external information centers 6, such as a traffic information center, a weather information center and a tourist information center, via a broadband network 7.

The server apparatus 1 is constituted with a computer (an information processing apparatus) including a CPU (central processing unit), a memory device, a hard disk device and the like (none shown). The functional blocks fulfilling the functions of the server apparatus 1 include a communication interface unit 10, an external information acquisition unit 11, an external information database 12 for acquired external information storage, a terminal request accepting unit 13, a route search condition setting unit 14, a route search unit 15, first map data 16, second map data 17, a route fragment generation unit 18 and an information providing unit 19, as shown in FIG. 1. It is to be noted that these functional blocks are realized by the CPU as it executes a program stored in a semiconductor memory or the hard disk device.

The external information acquisition unit 11 in FIG. 1 obtains various types of information originating from the external information centers 6, such as traffic information, weather information and facility information, and stores the information thus obtained into the external information database 12. The terminal request accepting unit 13 receives a route request transmitted from the navigation apparatus 5, analyzes the contents of the request and ensures that the analysis results are reflected in the processing executed by the route search condition setting unit 14. The route request will contain information indicating the vehicle position (or an origin), a destination, a scheduled traveling date/time and a search condition needed for a route search. While conditions stipulating that toll roads be given higher priority, that the minimum traveling distance or minimum traveling time be given top priority, that preference be placed on a route with lighter traffic, and the like are typically set as search conditions, the terminal request accepting unit 13 may also accept a condition with some ambiguity, leaving room for interpretation at the center, e.g., a preference for a popular route favored by other drivers or a recommended route.

When the route request contains a search condition with ambiguity, the route search condition setting unit 14 executes conversion processing so as to convert the ambiguous search condition to a more specific condition. For instance, a search condition "popular route" may be converted to a text expression such as "frequently-traveled route" and a search condition "recommended route" may be converted to a text expression "route traveling via a point of high interest attracting a great deal of user interest". Through this conversion processing, the ambiguous search condition is converted to the text expression that enables a search for specific information. It then generates a search key based upon the text expression resulting from the conversion. If the search key thus generated does not hit any information held in the external information database 12 or if more recent information is required, the necessary information is collected from an external information center 6 via the external information acquisition unit 12 by using the search key. The information thus collected is stored into the external information database 13. Information such as traffic information and weather information that is updated over relatively short intervals and is often used when setting route search conditions is collected from the external information centers 6 on a regular basis and is stored into the external information database 12 so as to ensure that the information in the external information database 12 is always up to date.

The route search unit 15 selects a plurality of sets of map data (16 and 17) in response to a route request and calculates routes to a destination with the map data thus selected by referencing search points (an origin, the destination and via points) set via the route search condition setting unit 14, search costs (travel costs such as travel time, distance, fees to be incurred and expected fuel consumption) and information such as traffic information and tourist point of interest information stored in the external information database 12. The route fragment generation unit 18 divides a route having been determined through the calculation executed by the route search unit 15 into at least one road segment (i.e., a route segment, a road link string, a single road link or a plurality of road links) and generates route fragments meeting a predetermined criterion. Road links are managed by using road link numbers. By referencing the map data, the position of a given road link can be ascertained based upon the road link number assigned thereto. The information providing unit 19 creates response data containing route information indicating a route recommended by the server apparatus 1 that includes the route fragments generated by the route fragment generation unit 18, and transmits the response data to the navigation apparatus 5.

As shown in FIG. 1, the navigation terminal 5 is configured by connecting a display unit 52, a mobile telephone unit 53, a GPS (global positioning system) receiver 54 and the like to a main unit 51. The main unit 51 is constituted with a small computer that includes a storage device such as a memory or a hard disk device. It is to be noted that instead of a storage device 55 or in addition to the storage device 55, a DVD (digital versatile disk) or a portable memory card may be utilized. The main unit 51 is able to communicate with the base station 3 for mobile telephony via the mobile telephone 53 and is also able to connect with the server apparatus 1 via the communication network 2.

The navigation terminal 5 is able to obtain guided route information provided by the server apparatus 1 by first transmitting a route request to the server apparatus 1. According to the present invention, the server apparatus 1 provides route fragments to be used as route elements when reconstructing the guided route. The navigation terminal 5 reconstructs the guided route by using the route fragments and outputs guidance instruction information to be provided as the vehicle travels along the guided route, to the display unit 52. It is to be noted that the route guidance instruction information may be output as audio guidance through a speaker or the like.

The main unit 51 is configured so as to fulfill functions embodied as functional blocks including a communication interface unit 510, an information acquisition unit 511, a route fragment storage unit 512, a route search unit 513, a route information storage unit 514, map data 515, a position information acquisition unit 516, a route guidance unit 517, an input/output interface unit 518 and a content request unit 519.

The content request unit 519, which is connected to the server apparatus 1 via the communication interface unit 510, issues a request to the server apparatus 1 for a guided route to a destination. The request, prepared based upon user input information entered by the user via the input/output interface unit 518 and position information obtained via the position information unit 518 and position information obtained via the position information acquisition unit 516, includes geographical point information indicating an origin (the current position), the destination and the like, and specifies a search condition such as minimum traveling time priority, minimum distance priority or lowest toll priority. The information acquisition unit 511 receives route information provided by the server apparatus 1 in response to the request and stores the route information thus received into the route fragment storage unit 512. The route information is made up with route fragments each constituted with a single road link or a plurality of road links present within a predetermined range that contains the route to the destination. The route fragments are generated at the server apparatus 1 as has been described earlier. The route search unit 513 sets a route condition matching the search condition indicated in the request issued to the server apparatus 1 and searches for a route to the destination by using the route fragments stored in the route fragment storage unit 512 and the map data 515. If the current location has been specified as the origin via the input/output interface unit 518, the route search unit 513 determines the route through calculation by designating the position indicated in the position information obtained via the position information acquisition unit 516 as the origin. The route thus calculated is stored into the route information storage unit 514. Assuming that the route is made up with route fragments, the route guidance unit 517 generates route information based upon the map data by determining the correspondence between the fragments and road link data included in the map data 515 and then generates route guidance information indicating intersections at which the vehicle is to turn right/left and the like, based upon the route information. The route guidance information having been generated as described above is brought up on display at the display unit 52 by the input/output interface unit 518. The navigation apparatus 5, having a sound output function, may provide, in addition to the screen display, summarized audio guidance information (announcing via points and road names) to the user.

It is to be noted that while the embodiment has been described by assuming that the terminal apparatus is constituted with a navigation terminal 5, the present invention is not limited to this example and may be adopted in conjunction with a communication terminal having functions equivalent to those described above.

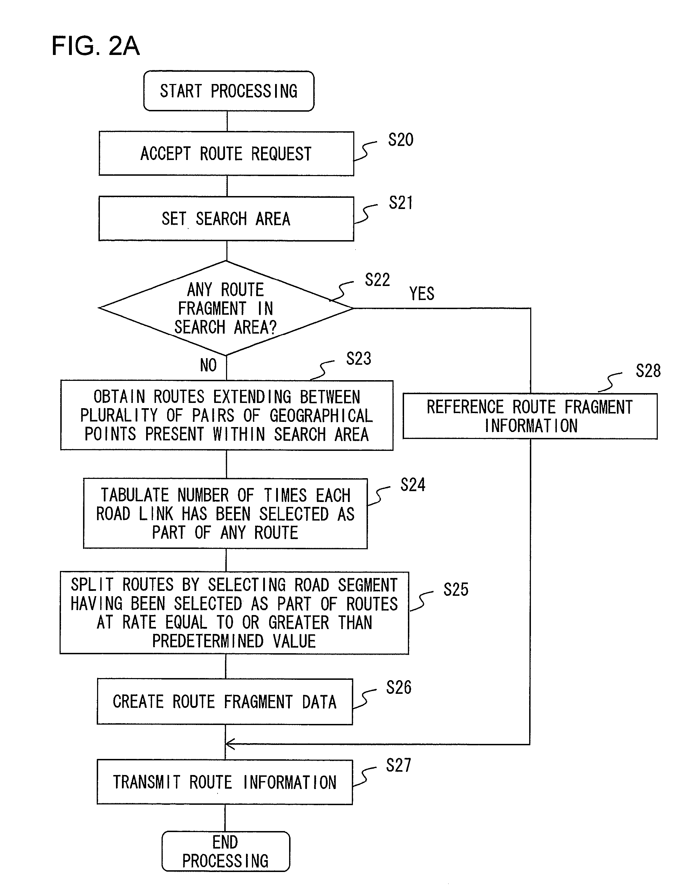

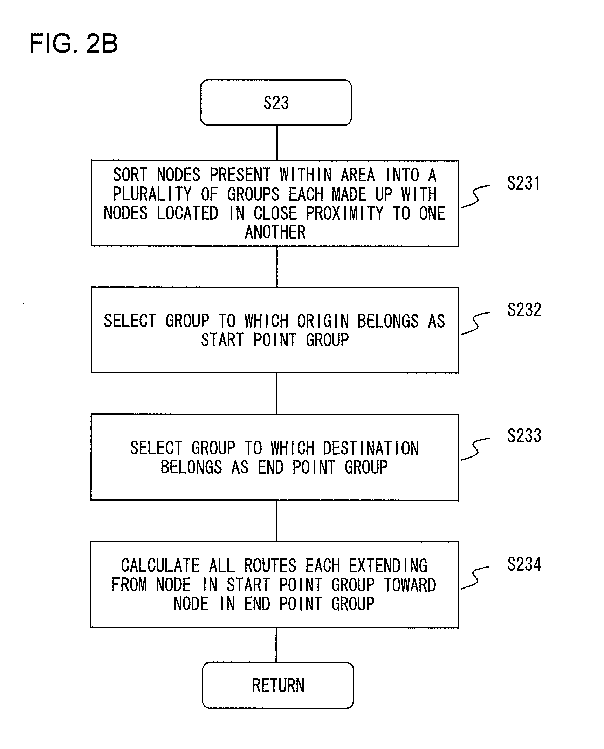

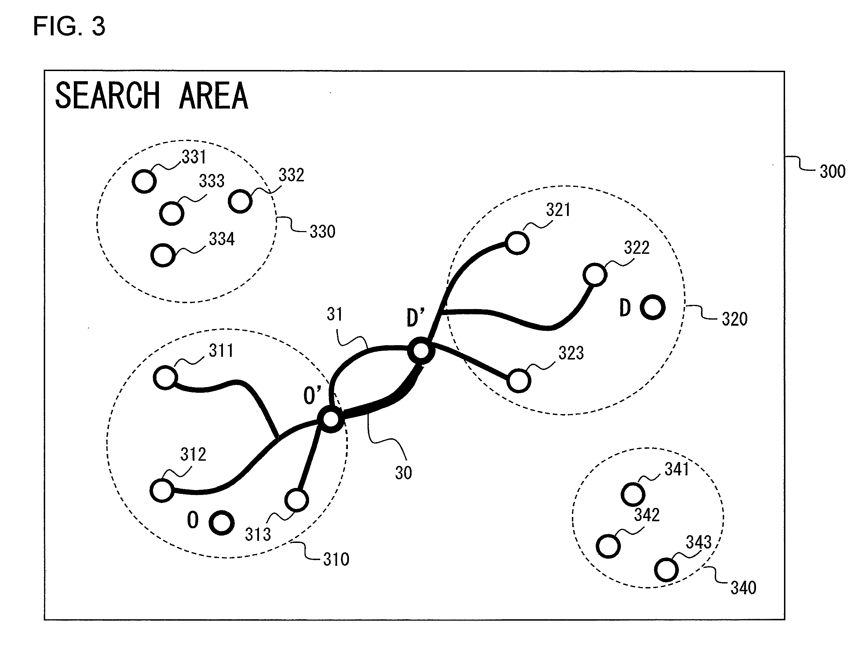

(Flow of processing executed at the server apparatus 1) FIGS. 2A and 2B present detailed flowcharts, in reference to which the algorithm of the processing executed in the server apparatus 1, constituting part of the route guidance system in FIG. 1, in order to generate route fragments is to be explained. FIG. 3 is a supplementary diagram provided to help describe the processing in FIGS. 2A and 2B with better clarity.

Upon the terminal request accepting unit 13 in the server apparatus 1 receiving a route request (S20) issued from the navigation terminal 5, the route search unit 15 in the server apparatus 1 ascertains the origin and the destination point indicated in the route request and sets a search area 300 containing these geographical points (S21). If the route request further indicates a via point, the route search unit 15 sets a search area 300 that also contains the via point. If any route fragment, having been generated for the search area 300 through processing executed in response to a past route search under a search condition matching the route search condition indicated in the current route request, is already held in a route fragment storage unit 181 (if an affirmative decision (yes) is made in S22), route information response data are generated by the route fragment generation unit 18 searching for such a route fragment through the route fragment storage unit 181 and referencing the route fragment (S28) and the route information response data thus generated are transmitted to the navigation terminal 5 by the information providing unit 19 (S27). If, on the other hand, no such route fragment is retained in the route fragment storage unit 181 (if a negative decision (no) is made in S22), a plurality of pairs of geographical points, each made up with a hypothetical origin (311, 312 or 313) and a hypothetical destination point (321, 322 or 323), among geographical points (nodes) present within the search area, are selected by the route search unit 15 and a plurality of routes, each heading from one of the hypothetical origins O' having been selected toward a hypothetical destination point D', are calculated by the route search unit 15 (S23) based upon the search condition indicated in the route request. Then, the number of times each road link has been selected as part of a route, i.e., the number of routes that include the particular road link, is tabulated by the route fragment generation unit 18 (S24), and the plurality of routes, each heading from a hypothetical origin O' toward a hypothetical destination point D', are split (S25) by the route fragment generation unit 18 selecting each road segment 30 with a ratio (frequency) of the number of times having been selected as part of a route to the entire number of routes taking a value equal to or greater than a predetermined value. Route fragment data, expressing a route segment constituted with the road segment thus selected, are generated by the route fragment generation unit 18 (S26) and the route fragment data thus generated by the route fragment generation unit 18 are transmitted to the navigation terminal 5 by the information providing unit 19 (S27).

The search points are selected by the route search unit 15 in step S23 through the procedure executed in steps S231 through S234. First, the nodes present in the search area are sorted into a plurality of groups (310, 320, 330 and 340) each made up with nodes in close proximity to one another (S231). The group 310, the group 320, the group 330 and the group 340 in this example are respectively made up with nodes 311, 312 and 313, nodes 321, 322 and 323, nodes 331, 332, 333 and 334, and nodes 341, 342 and 343. Such node grouping may be achieved through, for instance, cluster analysis, whereby nodes are grouped together based upon a Euclidean distance dij between a cluster i and a cluster j as expressed in (1). In this example, geographical points in close proximity to one another in a two-dimensional coordinate system are grouped together and accordingly, the Euclidean distance dij is calculated by designating each coordinate axis as a characteristic index k. The number of clusters used in the calculation is determined based upon the numbers of nodes making up individual clusters and the Euclidean distance between the clusters i and j.

$$d_{ij} = \sqrt{\sum_{k=1}^{P}\left(X_{ik} - X_{jk}\right)^2} \quad (i, j = 1, 2, \cdots, n) \qquad 〔1〕$$

The node group to which the origin O mentioned earlier belongs is designated as a start point group 310 (S232) and the node group to which the destination D belongs is designated as an end point group 320 (S233). Then, routes are calculated by designating each node among the nodes 311, 312 and 313 in the start point group 310 as a search start point and each node among the nodes 321, 322 and 323 in the end point group 320 as a search end point (S234).

Similar routes between various geographical points may be calculated in a similar manner by designating a group of nodes present within a predetermined distance range (or within a predetermined traveling time range) from the origin O as a start point group and designating a group of nodes present within a predetermined distance range (or within a predetermined traveling time range) from the destination point D as an end point group, without executing the cluster analysis.

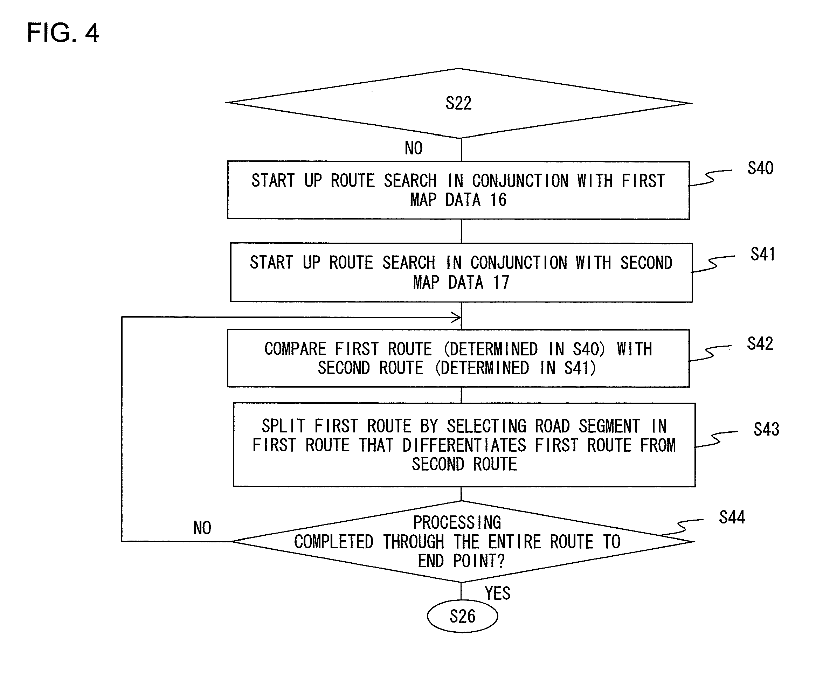

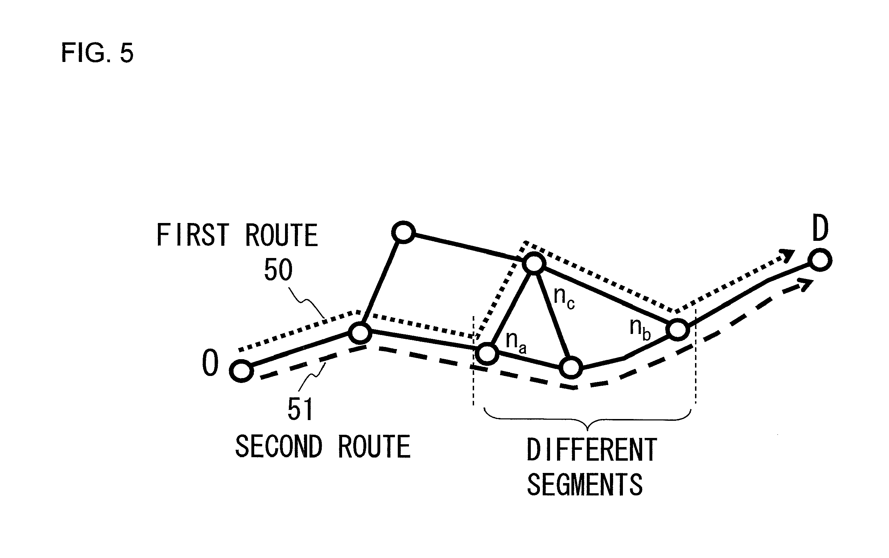

FIG. 4 presents a flowchart of route fragment generation processing that may be executed in the server apparatus 1 through an alternative method. FIG. 5 is a supplementary diagram provided to help describe the processing in FIG. 4 with better clarity. Instead of generating a route fragment by using the road segment 30, selected as part of a route with high frequency through the processing executed in steps S23 through S25 in FIG. 2, a route fragment is generated in this example through steps S40 through S44 by using a road segment included in a route that does not match any route calculated at the navigation terminal 5.

The route search unit 15 first references the first map data 16 and the most recently updated content in traffic information and the like accumulated in the external information database 12 and calculates a first route extending from the origin to the destination indicated in the route request received from the navigation terminal 5 (S40). It then calculates a second route extending from the origin to the destination by using the second map data 17 (S41). The second map data 17 used in this step are identical to the map data 515 held at the navigation terminal 5. If the route request message received from the navigation terminal 5 contains second route data, the server apparatus 1 may obtain the second route included in the route request message having been received, instead of calculating the second route in step S41. The server apparatus 1, which holds a plurality of sets of map data, calculates the second route by using the second map data 17 selected in correspondence to map version information included in the route request transmitted from the navigation terminal 5. The first route is a route 50 calculated by reflecting the latest map and content available at the server apparatus 1, whereas the second route is a route 51 calculated at the navigation terminal 5. Subsequently, the first route 50 is compared with the second route 51 by the route fragment generation unit 18 (S42) and the first route 50 is split by the route fragment generation unit 18 (S43) by selecting a specific road link group constituting a specific road segment in the first route (i.e., the road link extending between a node na and a node nc and the road link extending between the node nc and a node nb), which is not included in the second route. Such road segments that are not included in the second route are selected in sequence by the route fragment generation unit 18 repeatedly executing the processing over the full range extending from the origin O toward the destination D, until reaching the search end point (S44).

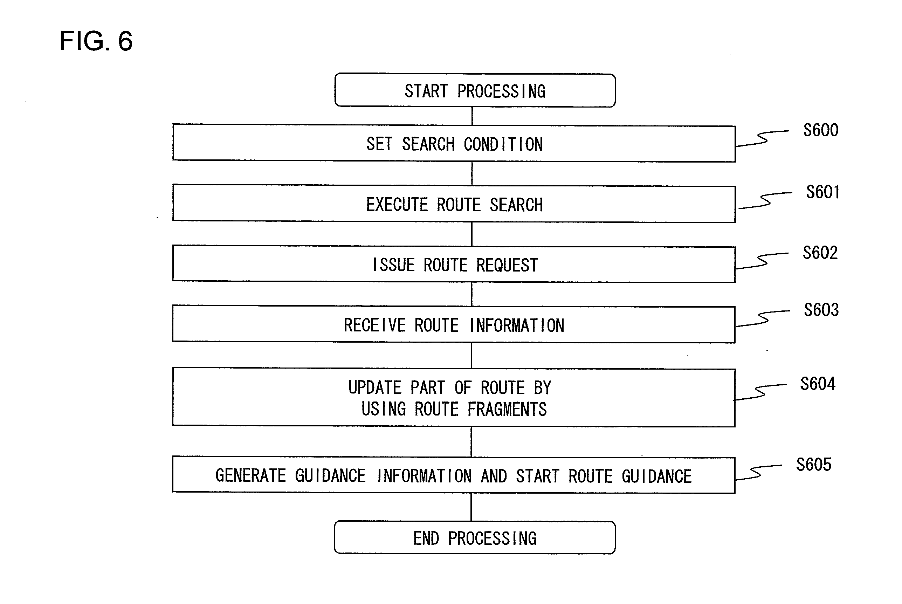

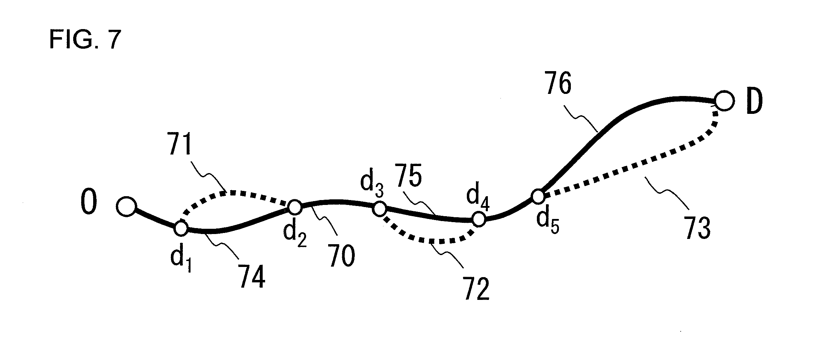

(Flow of processing executed at the navigation terminal 5) FIG. 6 presents a flowchart of the processing executed at the navigation terminal 5 in order to reconstruct the route recommended by the server apparatus 1 by using a received route fragment. FIG. 7 is a supplementary diagram provided to help describe the route reconstruction processing executed as shown in FIG. 6 with better clarity.

Once a route search condition is set via the input/output interface unit 518 (S600), route search processing to be executed by the route search unit 513 is started up. The route search unit 513 calculates a route 70 (S601) extending from the origin to the destination (and traveling through any specified via point) by using the map data 515 based upon the route search condition that has been set. Concurrently, a route request that includes information indicating the route search condition is transmitted to the server apparatus 1 by the content request unit 519 (S602). The information acquisition unit 511 receives route information (S603), which contains route fragments, transmitted from the server apparatus 1 in response to the request. The route 70 is then sequentially modified by the route search unit 513 using route fragments, among the received route segments, each of which starts and ends at nodes included in the route 70. In the example presented in FIG. 7, the start point and the end point of a route fragment 71 are respectively a node d1 and a node d2, the start point and the end point of a route fragment 72 are respectively a node d3 and a node d4 and the start point and the end point of a route fragment 73 are respectively a node D5 and the destination D. The nodes d1 through d5 are all nodes constituting part of the route 70. Accordingly, these route fragments are all used to modify the route 70. In other words, road segments (route segments) 74, 75 and 76 in the route 70 are respectively replaced with the route fragments 71, 72 and 73 by the route search unit 513 (S604). The route guidance unit 517 then generates guidance information (S605) used to guide the vehicle through right/left turns and the like based upon the route having been modified by using the route fragments, and once the guidance information is generated, the reconstruction processing for reconstructing the route recommended by the server apparatus 1 ends. The user is able to view the route thus reconstructed on display via the input/output interface unit 518 and the guidance information having been generated is provided to the user in a screen display and as audio guidance by the input/output interface unit 518.

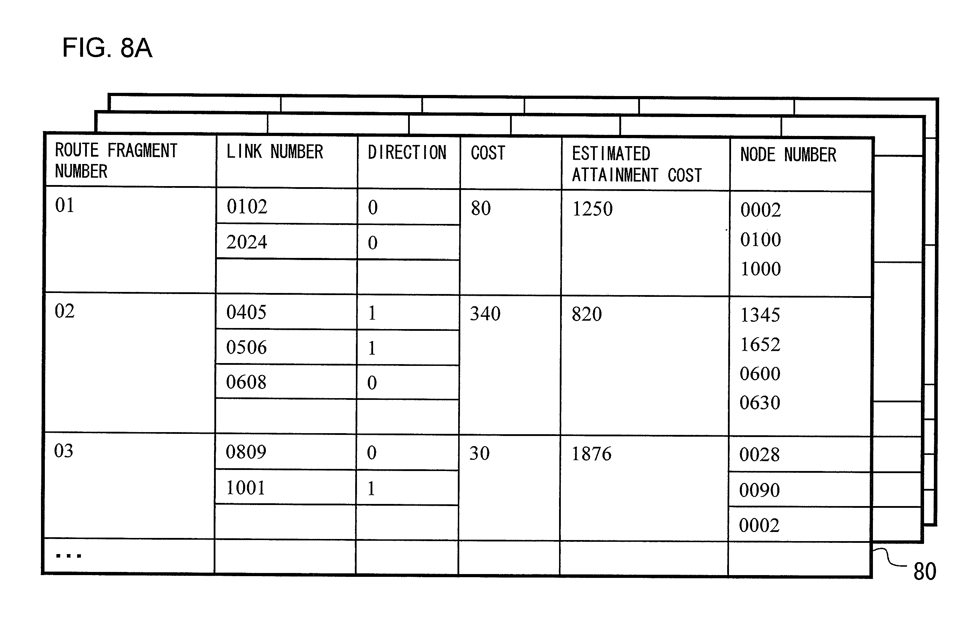

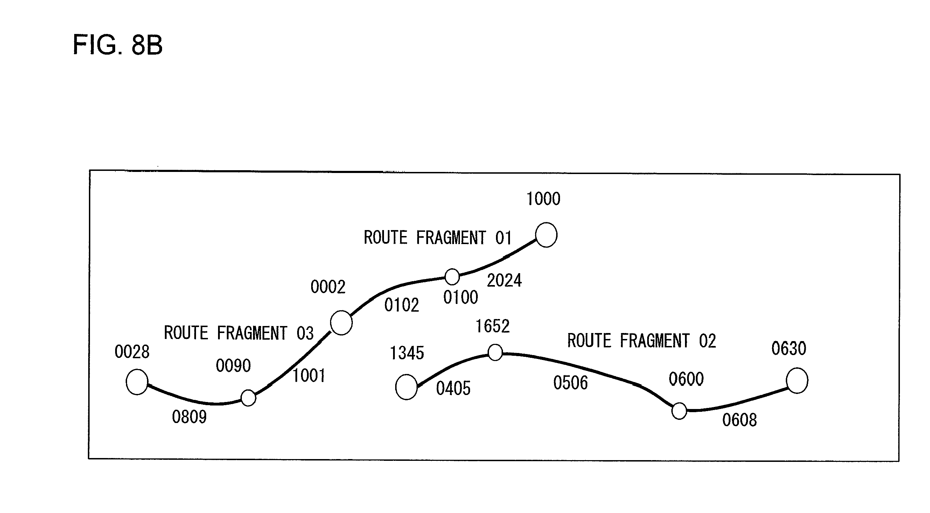

(Route fragment data) FIGS. 8A and 8B present examples of route fragment data that may be generated by the route fragment generation unit 18. Route fragment data 80 corresponding to each route fragment includes information indicating a route fragment number used to identify the particular route fragment, information indicating road link numbers (position reference data) assigned to road links constituting the route fragment, information indicating the direction along which the route fragment extends (e.g., 0 indicating the forward direction, in which the link numbers or the node numbers ascend and 1 indicating the reverse direction, in which the link numbers or the node numbers descend), information indicating the cost attributed to the particular route fragment, information indicating an estimated attainment cost corresponding to the part of the route extending from the route fragment toward the destination and information indicating the node numbers assigned to the nodes constituting the route fragment. However, the route fragment data 80 do not include road shape data. The estimated attainment cost is the average attainment cost expected to be incurred in order to reach the destination or a destination node group from the particular route fragment (the end point node of the route fragment). In addition, sets of route fragment data 80 are generated each in correspondence to a specific search condition. Different sets of route fragment data are generated in correspondence to, for instance, different days, different types of days, different time points, and different search costs (minimum traveling time priority, minimum distance priority, minimum fuel consumption, minimum toll charges and the like). The route fragment data corresponding to the route request originating from the navigation terminal 5 are transmitted by the information providing unit 19 from the server apparatus 1 to the navigation terminal 5.

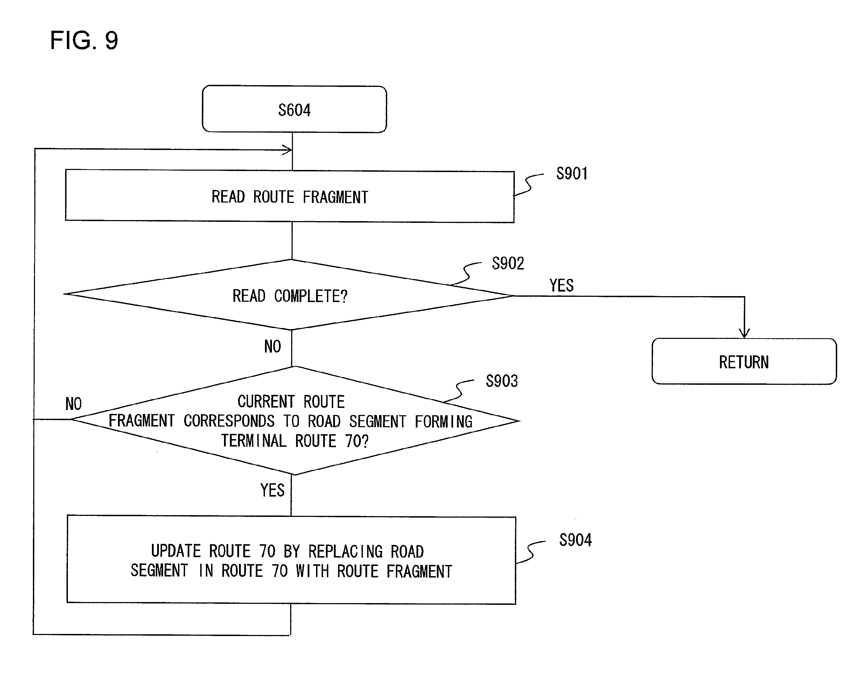

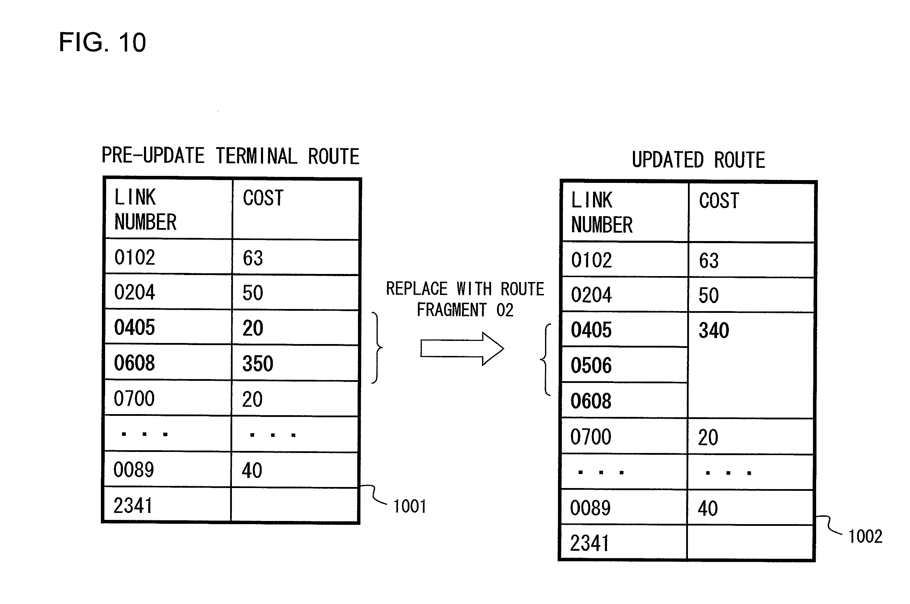

(Detailed description of the flow of processing executed at the navigation terminal 5 by using route fragment data) FIG. 9 presents a detailed flowchart, in reference to which the method adopted in the route modification processing executed in step S604 is to be described in further detail. FIG. 10 is a supplementary diagram provided to help describe the processing shown in FIG. 9 with better clarity and shows how a route list may be updated by using route fragments.

Route fragment data transmitted from the server apparatus 1 are read in sequence by the route search unit 513 (S901). Once all the route fragment data are read (once an affirmative decision (yes) is made in S902), the route modification processing ends. If the current route fragment corresponds to a road segment (route segment) constituting part of the route 70 having been determined through calculation executed at the navigation terminal 5 (if an affirmative decision is made (yes) in S903), the particular road segments in the route 70 is replaced with the route fragment, thereby updating the route 70 (S904). In the example presented in FIG. 10, route data 1001 express the pre-update route 70, whereas route data 1002 express an updated route obtained by modifying the initial route with the route fragment data 80 provided from the server apparatus 1. The route data 1001 and the route data 1002 each include information indicating road link numbers, i.e., position reference data, and cost data indicating the travel costs. The route fragment data 80 include a road segment extending from a start link 0405 to an end link 0608. These road links are both part of the route 70, and an updated route that passes through the road links 0405, 0506 and 0608 with travel cost equal to 340 is generated by updating the route 70 with the route fragment data. While the update target road segment is identified by comparing the links making up the route 70 and the links making up the route fragment data in the example described above, a similar advantage will be achieved by identifying a road segment through comparison of the nodes making up the route 70 and the nodes making up the route fragment data.

The server apparatus 1 achieved in the embodiment generates route fragments by dividing the route into a plurality of road segments and transmits only road segments needed for route reconstruction to the navigation terminal 5. Since this minimizes the volume of information transmitted to the navigation terminal 5, the communication load is reduced. Namely, the volume of route information that must be transmitted from the server apparatus 1 to the navigation terminal 5 can be reduced. In addition, data expressing route fragments instead of the data expressing the entire route are received at the navigation terminal 5 and then the correspondence between the route fragment data having been received and the map data 515 held at the navigation terminal 5 is determined. This means that the load of the processing executed for purposes of route reconstruction is reduced. With the communication load and the terminal processing load both reduced as described above, the operation lag elapsing before the route guidance starts at the navigation terminal 5 having obtained the route information from the server apparatus 1 is reduced.

Furthermore, the navigation terminal 5 in the embodiment searches for a route by using the map data 515 held at the navigation terminal 5 and the route fragments. Thus, even if the vehicle leaves the route or the current position is updated as the vehicle continues to move while the route information originating from the server apparatus 1 is being acquired at the navigation terminal 5, the route to the destination can be ascertained at the navigation terminal 5 without requiring a reconnect with the server apparatus 1.

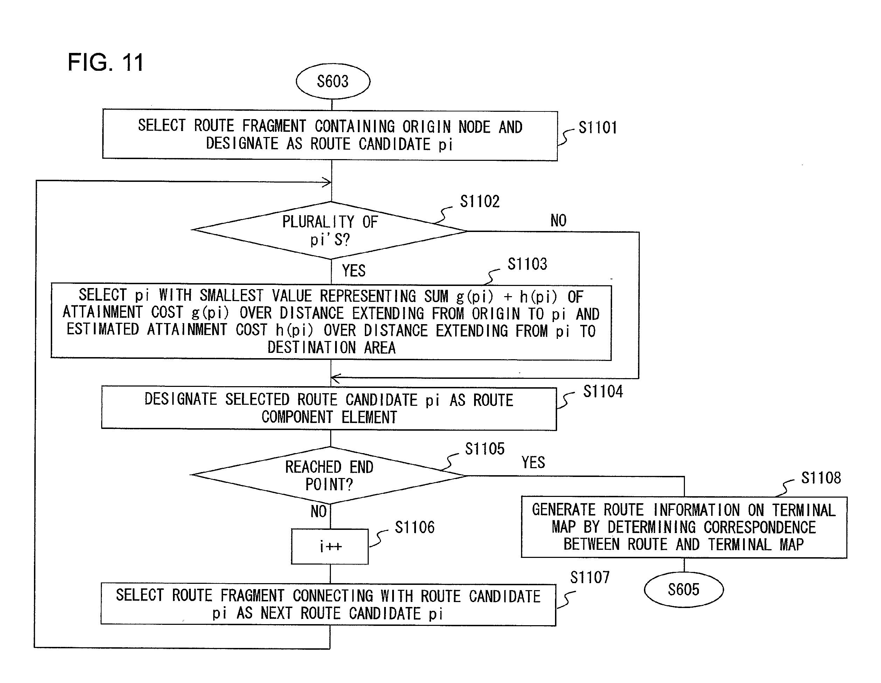

(Flow of processing executed at the navigation terminal 5 in order to generate route information by using route fragments) FIG. 11 presents a flowchart showing how route information may be obtained by using route fragment data provided from the server apparatus 1 without using the map data 515 held at the navigation terminal 5 through a method alternative to that adopted in step S604 in FIG. 6.

Upon the information acquisition unit 511 in the navigation terminal 5 receiving route fragment data (S603), the route search unit 513 in the navigation terminal 5 selects a route fragment that includes the origin node among the route fragments in the route fragment data, and designates the selected route fragment as a route candidate pi (an origin route fragment) (S1101). If there are a plurality of route candidates pi (yes in S1102), the route fragment achieving a least value representing the sum of an attainment cost g(pi) to be incurred as the vehicle travels from the origin node (or the route fragment containing the origin node) to the route candidate pi (the attainment cost g(pi) equals an initial cost of 0 if the route candidate pi includes the origin node), and an estimated attainment cost h(pi) expected to be incurred as the vehicle travels from the route candidate pi toward a point near the destination (refer to the estimated attainment cost indicated in the route fragment data 80) is selected and designated as the route candidate pi by the route search unit 513 (S1103). The route candidate pi selected in the step S1101 after the negative decision made in the step 1102 or selected in the step S1103 after the affirmative decision made in the step 1102 is then incorporated as an element constituting part of the route to the destination by the route search unit 513 (S1104). If the route candidate pi does not directly reach the destination node (no in S1105), a route component element index i is updated by the route search unit 513 (S1106), the route fragment data are searched for a route fragment connecting with the route candidate pi among the route fragments in the route fragment data by the route search unit 513 and the route fragment found through the search is designated as the next search candidate pi by the route search unit 513. When the destination node is reached directly by the current route candidate pi (yes in S1105), the correspondence between the route expressed by route fragment numbers and the terminal map data is determined by the route search unit 513 and thus, the route data constituted with the route fragment numbers are converted by the route search unit 513 to route information (S1108) made up with terminal map road links, such as the route data 1002 shown in FIG. 10, which include the position reference data indicating the road link numbers and the cost data indicating the travel costs. In step S605, additional information indicating road shapes, intersection positions, traffic lanes, right/left turns and the like is obtained by the route search unit 513 referencing the additional information appended to the road links constituting the route and route information is generated by the route search unit 513 incorporating the additional information thus obtained, before the route search processing ends.

While the positions of route fragments expressed by the route fragment data are determined by referencing link numbers or node numbers in the embodiment described above, the map data held at the server apparatus 1 and the map data held at the navigation terminal 5 may not always match. In such a case, positions cannot be referenced based upon common road link numbers or node numbers. As a resolution, positions may be indicated as coordinate points in a two-dimensional coordinate system such as the latitude/longitude coordinate system or a map coordinate system, or as coordinate points in a three-dimensional coordinate system that provides altitude information as well. Since the positions of the route fragments alone will be indicated as positional coordinates, the load of communication and the load of terminal processing can both be reduced compared to those in the route guidance system in the conventional art, in which data representing the entire route are transmitted.

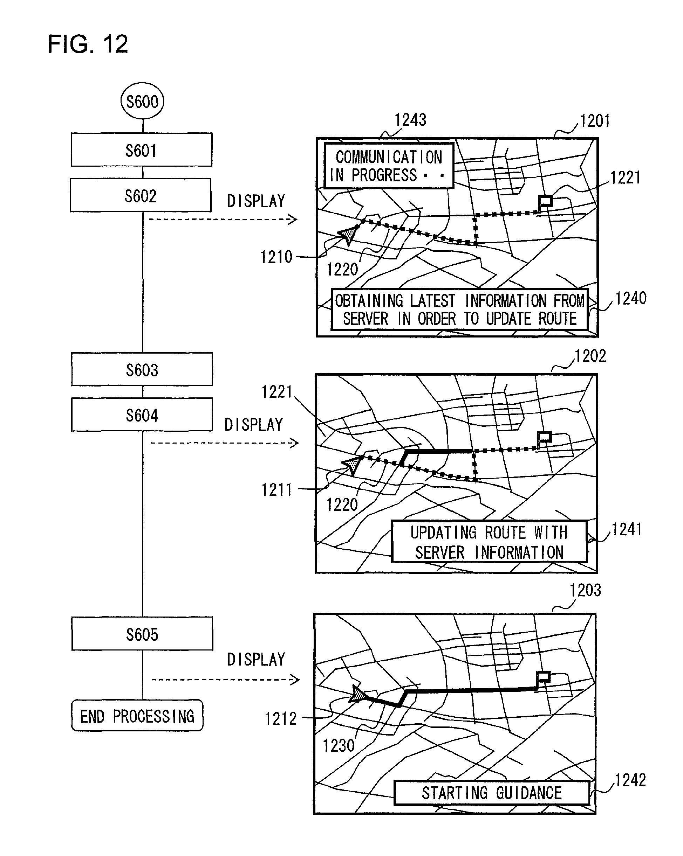

(Display examples in the navigation terminal 5) FIG. 12 presents examples of display screens of a map and a route that may be brought up at the display unit 52 by the input/output interface unit 518 as a route generated by using route fragment data at the navigation terminal 5.

A terminal route 1220 from an origin 1210 to a destination 1221, having been calculated through the processing executed in step S601, may be brought up on display on the map, as indicated by reference numeral 1201. The terminal route 1220, which is not a route determined by factoring in the latest content available at the server apparatus 1, is displayed by adopting a mode different from that used for a guided route 1230 until the guided route is confirmed (the terminal route 1220 is indicated with a dotted line in this example). In addition, when route fragment data are received by the information acquisition unit 51 at the navigation terminal 5 through connection with the server apparatus 1, the reception status is indicated in pop-up messages at the display unit 52 by the input/output interface unit 518 (1240, 1241, 1242 and 1243). As the route fragment data reception is completed by the information acquisition unit 51 through the processing executed in steps S603, the reception completion is indicated at the display unit 52 by the input/output interface unit 518. Then, once the terminal route 1220 is updated by the route search unit 513 through the processing executed in steps S604, the display is switched to a display screen 1202 by the input/output interface unit 518. In the display screen 1202, an updated portion 1221 in the terminal route 1220 is indicated by adopting a display mode different from that for the terminal route 1220. Once the route guidance information is generated by the route guidance unit 517 in step S605, the display is switched to a display screen 1203 by the input/output interface unit 518 to start route guidance.

Reference numerals 1210, 1211 and 1212 each indicate a subject vehicle position. After the user issues a route request, the subject vehicle position is constantly updated as the subject vehicle travels on until the route reflecting the route information provided from the server apparatus 1 is output and the guidance starts accordingly. In the embodiment, the route search unit 513 in the navigation terminal 5 calculates a route based upon the route fragment data obtained from the server apparatus 1 and the terminal map data 515. Thus, the need for connecting with the server apparatus 1 each time the route is updated is eliminated, and this route calculation method makes it possible to provide a route starting from the current subject vehicle position at all times by factoring in the latest content available at the server apparatus 1. This principle also applies when the vehicle leaves the route. Namely, even if the vehicle leaves the route displayed in, for instance, the display screen 1203, a route from the current position, outside the original route, to the destination can be recalculated by using the route fragments held in the route fragment storage unit 512 without having to reconnect with the server apparatus 1.

The above described embodiments are examples and various modifications can be made without departing from the scope of invention.

## Claims

1. A navigation terminal apparatus that engages in information exchange with an external apparatus, comprising:

 terminal map data that include road link data;
 a route search means for searching for a traveling route, through which a mobile object is to travel from an origin to a destination, by using the terminal map data based upon a specific search condition pertaining to a travel cost to be incurred as the mobile object travels through the traveling route; and
 an updating means for updating route data expressing the traveling route by replacing a first road link group making up a route segment accounting for at least part of the traveling route with a second road link group making up another route segment, with a start point and an end point thereof matching the start point and the end point of the route segment accounting for at least part of the traveling route, wherein:

  the another route segment is included in route information obtained from the external apparatus through the information exchange; and
  the route data include position reference data pertaining to positions of all road links constituting the traveling route and cost data pertaining to travel costs of all the road links.

2. A navigation terminal apparatus according to claim 1, further comprising:

 a transmission means for transmitting a route fragment request, which include information indicating the origin, the destination and the specific search condition, to the external apparatus; and
 a reception means for receiving route fragment data, which include position reference data pertaining to a position of a route fragment made up with a single road link or a plurality of road links present within a specific area containing the traveling route having been searched by the route search means and cost data pertaining to travel cost corresponding to the route fragment, transmitted from the external apparatus in response to the route fragment request, wherein:

  the route information is constituted with the route fragment data; and
  if the route fragment data include position reference data pertaining to the position of the second road link group and cost data pertaining to the travel cost through the second road link group, the updating means updates the route data based upon the route fragment data.

3. A navigation terminal apparatus according to claim 2, further comprising:

a selection means for selecting, based upon the route fragment data, the route segment which is included in the second road link group, and is present within the specific area.

4. A navigation terminal apparatus according to any one of claims 1 through 3, further comprising:

a guidance information generation means for generating guidance information to be used to guide the mobile object through an updated traveling route corresponding to the route data having been updated by the updating means.

5. A navigation terminal apparatus according to claim 4, wherein:

the map data include further additional information data including road shape information, intersection position information, traffic lane information and right/left turn directional information, in correspondence to the road link data; and
the guidance information generation means generates the guidance information based upon the additional information data obtained by determining correspondence between road links constituting the updated traveling route and the road link data.

6. A navigation terminal apparatus according to claim 2, further comprising:

an output means for outputting the traveling route searched by the route search means in a first mode when the traveling route searched by the route search means is output and outputting an updated traveling route corresponding to the route data having been updated by the updating means in a second mode different from the first mode when the updated traveling route is output.

7. A navigation terminal apparatus according to claim 6, wherein:

the output means outputs reception status information indicating a status of reception of the route fragment data by the reception means.

8. A navigation terminal apparatus according to claim 7, wherein:

once the reception of the route fragment data by the reception means is completed and the updating means finishes updating the route data, the output means outputs the traveling route, searched by the route search means, in the first mode and outputs the updated traveling route in the second mode.

9. A navigation terminal apparatus according to claim 6, further comprising:

a guidance information generation means for generating guidance information to be used to guide the mobile object through the updated traveling route, wherein:

once the guidance information is generated by the guidance information generation means, the output means outputs the updated traveling route in the second mode without outputting the traveling route searched by the route search means.

10. A route guidance system, comprising:

a route guidance server apparatus; and
a navigation terminal apparatus according to any one of claims 1 through 9, wherein:

the external apparatus is the route guidance server apparatus; and
the route guidance server apparatus includes:

first server map data;
a request accepting means for accepting the route fragment request, which include information indicating the origin, the destination and the specific search condition, transmitted by a transmission means of the navigation terminal apparatus;
a server route search means for searching for a first traveling route for the mobile object, which extends from the origin to the destination, by using the first server map data based upon the specific search condition and traffic information;

a road information acquisition means for obtaining, in response to the route fragment request having been accepted by the request accepting means, road information to be used in a route search for the first traveling route to be searched by the server route search means;

a route fragment generation means for generating a route fragment made up with a single road link or a plurality of road links in response to the route fragment request, having been accepted by the request accepting means, by splitting the route determined through the route search executed based upon the specific route search condition so as to satisfy a predetermined criterion based upon the road information obtained by the road information acquisition means; and

a distribution means for transmitting the route fragment having been generated by the route fragment generation means to a reception means of the navigation terminal apparatus.

11. A route guidance server apparatus included in a route guidance system according to claim 10.

12. A route guidance server apparatus according to claim 11, wherein:

the road information is frequency information pertaining to frequency with which each of the single road link or the plurality of road links is included in a plurality of routes having been searched for a plurality of navigation terminal apparatuses;

the predetermined criterion is satisfied when the frequency is represented by a value equal to or greater than a predetermined value; and

the route fragment generation means splits the route searched through the route search by forming the route fragment with a road link, the frequency of which is represented by a value equal to or greater than the predetermined value among the single road link or the plurality of road links.

13. A route guidance server apparatus according to claim 12, wherein:

a plurality of start points and a plurality of end points of the plurality of routes searched for the plurality of navigation terminal apparatuses are all located within a predetermined distance from the origin and the destination respectively.

14. A route guidance server apparatus according to claim 11, further comprising:

second server map data different from the first server map data; and
a traffic information acquisition means for obtaining the traffic information originating from an external server, wherein:

the second server map data corresponds to the terminal map data held at the navigation terminal apparatus;
the server route search means searches for a second traveling route for the mobile object, which extends from the origin to the destination, by using the second server map data based upon the specific search condition;
the road information is information pertaining to a specific road link group not included in the second traveling route, among road link groups constituting the first traveling route; and
the route fragment generation means splits the first traveling route by forming the route fragment with the specific road link group.

FIG. 1

EP 2 624 235 A2

# FIG. 2A

```
        ┌──────────────────┐
        │ START PROCESSING │
        └──────────────────┘
                 │
     ┌───────────────────────┐    S20
     │  ACCEPT ROUTE REQUEST │
     └───────────────────────┘
                 │
     ┌───────────────────────┐    S21
     │    SET SEARCH AREA     │
     └───────────────────────┘
                 │
              ╱──────╲           S22    YES
         ╱  ANY ROUTE  ╲ ──────────────────────┐
        ╲  FRAGMENT IN  ╱                       │
         ╲ SEARCH AREA? ╱                       │
              ╲──────╱                          │
               NO                               │
     ┌─────────────────────────────┐  S23       │
     │ OBTAIN ROUTES EXTENDING      │            │
     │ BETWEEN PLURALITY OF PAIRS   │            │
     │ OF GEOGRAPHICAL POINTS       │   ┌─────────────────────────────┐  S28
     │ PRESENT WITHIN SEARCH AREA   │   │  REFERENCE ROUTE FRAGMENT    │
     └─────────────────────────────┘   │       INFORMATION            │
                 │                      └─────────────────────────────┘
     ┌─────────────────────────────┐  S24         │
     │ TABULATE NUMBER OF TIMES     │              │
     │ EACH ROAD LINK HAS BEEN      │              │
     │ SELECTED AS PART OF ANY      │              │
     │ ROUTE                        │              │
     └─────────────────────────────┘              │
                 │                                 │
     ┌─────────────────────────────┐  S25          │
     │ SPLIT ROUTES BY SELECTING    │              │
     │ ROAD SEGMENT HAVING BEEN     │              │
     │ SELECTED AS PART OF ROUTES   │              │
     │ AT RATE EQUAL TO OR GREATER  │              │
     │ THAN PREDETERMINED VALUE     │              │
     └─────────────────────────────┘              │
                 │                                 │
     ┌─────────────────────────────┐  S26          │
     │  CREATE ROUTE FRAGMENT DATA  │              │
     └─────────────────────────────┘              │
                 │ ◄───────────────────────────────┘
     ┌─────────────────────────────┐  S27
     │  TRANSMIT ROUTE INFORMATION  │
     └─────────────────────────────┘
                 │
        ┌──────────────────┐
        │       END        │
        │   PROCESSING     │
        └──────────────────┘
```

## FIG. 2B

```
                  ┌──────────────────────┐
                  │         S23          │
                  └──────────────────────┘
                              │
         ┌────────────────────────────────────────┐
         │  SORT NODES PRESENT WITHIN AREA INTO A  │        S231
         │  PLURALITY OF GROUPS EACH MADE UP WITH  │
         │  NODES LOCATED IN CLOSE PROXIMITY TO ONE│
         │                 ANOTHER                 │
         └────────────────────────────────────────┘
                              │
         ┌────────────────────────────────────────┐
         │  SELECT GROUP TO WHICH ORIGIN BELONGS AS│        S232
         │              START POINT GROUP          │
         └────────────────────────────────────────┘
                              │
         ┌────────────────────────────────────────┐
         │  SELECT GROUP TO WHICH DESTINATION      │        S233
         │        BELONGS AS END POINT GROUP       │
         └────────────────────────────────────────┘
                              │
         ┌────────────────────────────────────────┐
         │  CALCULATE ALL ROUTES EACH EXTENDING    │        S234
         │  FROM NODE IN START POINT GROUP TOWARD  │
         │        NODE IN END POINT GROUP          │
         └────────────────────────────────────────┘
                              │
                  ┌──────────────────────┐
                  │        RETURN        │
                  └──────────────────────┘
```

FIG. 3

SEARCH AREA

331
333    332
330
334

321
322
D   320
31
D'
323

311
O'
30
312
O   313
310

341
342
343
340

EP 2 624 235 A2

# FIG. 4

```
                         ┌──────────────┐
                         │     S22      │
                         └──────┬───────┘
                             NO │
        ┌────────────────────────────────────────────┐
        │ START UP ROUTE SEARCH IN CONJUNCTION WITH   │  ⟋ S40
        │ FIRST MAP DATA 16                           │
        └────────────────────────────────────────────┘
        ┌────────────────────────────────────────────┐
        │ START UP ROUTE SEARCH IN CONJUNCTION WITH   │  ⟋ S41
        │ SECOND MAP DATA 17                          │
        └────────────────────────────────────────────┘
        ┌────────────────────────────────────────────┐
        │ COMPARE FIRST ROUTE (DETERMINED IN S40)     │  ⟋ S42
        │ WITH SECOND ROUTE (DETERMINED IN S41)       │
        └────────────────────────────────────────────┘
        ┌────────────────────────────────────────────┐
        │ SPLIT FIRST ROUTE BY SELECTING ROAD SEGMENT │  ⟋ S43
        │ IN FIRST ROUTE THAT DIFFERENTIATES FIRST    │
        │ ROUTE FROM SECOND ROUTE                     │
        └────────────────────────────────────────────┘
                    ┌──────────────────────────┐
          NO        │      PROCESSING          │   ⟋ S44
        ◄───────────│ COMPLETED THROUGH THE    │
                    │ ENTIRE ROUTE TO END      │
                    │ POINT?                   │
                    └──────────┬───────────────┘
                           YES │
                         ┌──────────────┐
                         │     S26      │
                         └──────────────┘
```

EP 2 624 235 A2

FIG. 5

FIRST ROUTE
50

0

51
SECOND ROUTE

$n_a$

$n_c$

$n_b$

D

DIFFERENT
SEGMENTS

EP 2 624 235 A2

# FIG. 6

START PROCESSING

SET SEARCH CONDITION — S600

EXECUTE ROUTE SEARCH — S601

ISSUE ROUTE REQUEST — S602

RECEIVE ROUTE INFORMATION — S603

UPDATE PART OF ROUTE BY USING ROUTE FRAGMENTS — S604

GENERATE GUIDANCE INFORMATION AND START ROUTE GUIDANCE — S605

END PROCESSING

EP 2 624 235 A2

FIG. 7

EP 2 624 235 A2

# FIG. 8A

| ROUTE FRAGMENT NUMBER | LINK NUMBER | DIRECTION | COST | ESTIMATED ATTAINMENT COST | NODE NUMBER |
|---|---|---|---|---|---|
| 01 | 0102 | 0 | 80 | 1250 | 0002 |
|  | 2024 | 0 |  |  | 0100 |
|  |  |  |  |  | 1000 |
| 02 | 0405 | 1 | 340 | 820 | 1345 |
|  | 0506 | 1 |  |  | 1652 |
|  | 0608 | 0 |  |  | 0600 |
|  |  |  |  |  | 0630 |
| 03 | 0809 | 0 | 30 | 1876 | 0028 |
|  | 1001 | 1 |  |  | 0090 |
|  |  |  |  |  | 0002 |
| ... |  |  |  |  |  |

80

EP 2 624 235 A2

# FIG. 8B

# FIG. 9

```
                    ┌─────────────────┐
                    │      S604       │
                    └────────┬────────┘
                             │
   ┌─────────────────────────▼─────────────────────────┐ ← S901
   │              READ ROUTE FRAGMENT                   │
   └─────────────────────────┬─────────────────────────┘
                             │
                        ◇ READ COMPLETE? ◇ ← S902 ──YES──→ ┌──────────┐
                             │                             │  RETURN  │
                            NO                             └──────────┘
                             │
     NO ←◇ CURRENT ROUTE FRAGMENT CORRESPONDS TO ROAD SEGMENT ◇ ← S903
              FORMING TERMINAL ROUTE 70?
                             │
                            YES
                             │
   ┌─────────────────────────▼─────────────────────────┐ ← S904
   │  UPDATE ROUTE 70 BY REPLACING ROAD SEGMENT         │
   │  IN ROUTE 70 WITH ROUTE FRAGMENT                   │
   └────────────────────────────────────────────────────┘
```

EP 2 624 235 A2

# FIG. 10

EP 2 624 235 A2

**PRE-UPDATE TERMINAL ROUTE**

| LINK NUMBER | COST |
|---|---|
| 0102 | 63 |
| 0204 | 50 |
| **0405** | **20** |
| **0608** | **350** |
| 0700 | 20 |
| . . . | . . . |
| 0089 | 40 |
| 2341 | |

1001

REPLACE WITH ROUTE
FRAGMENT 02

⟹

**UPDATED ROUTE**

| LINK NUMBER | COST |
|---|---|
| 0102 | 63 |
| 0204 | 50 |
| **0405** | **340** |
| **0506** | |
| **0608** | |
| 0700 | 20 |
| . . . | . . . |
| 0089 | 40 |
| 2341 | |

1002

## FIG. 11

$$S603$$

SELECT ROUTE FRAGMENT CONTAINING ORIGIN NODE AND DESIGNATE AS ROUTE CANDIDATE pi — S1101

PLURALITY OF pi'S? — S1102    NO

YES — S1103

SELECT pi WITH SMALLEST VALUE REPRESENTING SUM g(pi) + h(pi) OF ATTAINMENT COST g(pi) OVER DISTANCE EXTENDING FROM ORIGIN TO pi AND ESTIMATED ATTAINMENT COST h(pi) OVER DISTANCE EXTENDING FROM pi TO DESTINATION AREA

DESIGNATE SELECTED ROUTE CANDIDATE pi AS ROUTE COMPONENT ELEMENT — S1104

REACHED END POINT? — S1105    YES

NO

i++ — S1106

SELECT ROUTE FRAGMENT CONNECTING WITH ROUTE CANDIDATE pi AS NEXT ROUTE CANDIDATE pi — S1107

GENERATE ROUTE INFORMATION ON TERMINAL MAP BY DETERMINING CORRESPONDENCE BETWEEN ROUTE AND TERMINAL MAP — S1108

$$S605$$

EP 2 624 235 A2

24

# FIG. 12

S600

S601

S602 ----DISPLAY---->

1243 — 1201

COMMUNICATION
IN PROGRESS · ·

1221

1210 —
1220

OBTAINING LATEST INFORMATION FROM
SERVER IN ORDER TO UPDATE ROUTE

1240

S603

S604 ----DISPLAY---->

1221
1211 —
1220

1202

UPDATING ROUTE WITH
SERVER INFORMATION

1241

S605 ----DISPLAY---->

END PROCESSING

1212 —
1230

1203

STARTING GUIDANCE

1242

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012021743 A
- JP 2002228468 A

- JP 2004077254 A